# EUROPEAN PATENT APPLICATION

(11) **EP 4 654 357 A1**
(43) Date of publication of application: **26.11.2025**
(21) Application number: 23917087.1
(22) Date of filing: 28.09.2023
(51) Int. Cl.: H01M 50/298, H01M 50/204, H01M 50/244, H01M 50/249, B60L 50/60, B60K 1/04

(54) **BATTERY PACK, CHASSIS ASSEMBLY AND VEHICLE**

(30) Priority: 18.01.2023 CN 202320234482 U
(71) Applicant: BYD Company Limited, Shenzhen, Guangdong 518118 (CN)
(72) Inventor: ZHANG, Balin, Shenzhen, Guangdong 518118 (CN); QIN, Cheng, Shenzhen, Guangdong 518118 (CN); YANG, Xiaodan, Shenzhen, Guangdong 518118 (CN)
(74) Representative: Mathys & Squire
(86) International application number: PCT/CN2023/122746
(87) International publication number: WO 2024/152619

(57) **Abstract**

A battery pack (20), a chassis assembly having a battery pack, and a vehicle. The battery pack is provided with a recess structure (2), and the recess structure (2) is used for accommodating a longitudinal beam (11) of a vehicle frame (10); and a wire outlet (34) is formed at the top of the battery pack (20), and the wire outlet (34) is adapted for leading out a wire harness of the battery pack (20).

## Description

### CROSS-REFERENCE TO RELATED APPLICATIONS

The present application is based on a Chinese patent application with application No. 2023202344821, filed on January 18, 2023, entitled "BATTERY PACK, CHASSIS ASSEMBLY AND VEHICLE", and claims priority to the Chinese patent application. The Chinese patent application is incorporated herein by reference in its entirety.

### FIELD

The present disclosure relates to the field of electric vehicles, particularly to a battery pack, chassis assembly, and vehicle.

### BACKGROUND

With the development of new energy vehicles, heavy-duty trucks are gradually adopting new energy sources for energy supply. In related technologies, the wire outlet of the battery pack of new energy heavy-duty trucks is located on both sides of the battery pack along the width direction of the vehicle, which is not conducive to the layout of the battery pack outlet harness and the connection of the outlet harness with other components, at the same time, the wire outlet is located on both sides of the battery pack along the width direction of the vehicle, and when connecting the wire harness, it occupies more space on the outer side of the battery pack width direction, resulting in poor space utilization.

### SUMMARY

The present application is intended to resolve one of the technical problems present in the prior art. Therefore, one objective of the present application is to provide a battery pack, by forming an wire outlet on the top of the battery pack for leading out a wire harness of the battery pack, which is conducive to the layout of the battery pack outlet harness and the connection of the outlet harness with other components, and at the same time, can fully utilize the upper space of the battery pack and improve the overall space utilization.

The present application also provides a chassis assembly with the above-mentioned battery pack.

The present application also provides a vehicle having the above-mentioned chassis assembly.

According to the first embodiment of the present application, the battery pack has a recess structure for accommodating the longitudinal beam of the vehicle frame, and a wire outlet is formed at the top of the battery pack, and the wire outlet is adapted for leading out a wire harness of the battery pack.

According to the battery pack of the present embodiment, by forming an wire outlet on the top of the battery pack for leading out a wire harness of the battery pack, it is conducive to the layout of the battery pack outlet harness and the connection of the outlet harness with other components, and at the same time, it can fully utilize the upper space of the battery pack and improve the overall space utilization.

According to some embodiments of the present application, the wire harness includes a thermal management tube wire harness and an electrical connection wire harness, and a routing space is defined between the upper surface of the battery pack and the vehicle frame, and the routing space is used for routing the wiring harness.

According to some embodiments of the present application, the recess structure divides the upper portion of the battery pack into a first battery portion and a second battery portion, the first battery portion is adapted to be located inside the vehicle frame, the wire outlet is set at the top of the first battery portion, and the routing space is located above the first battery portion.

According to some embodiments of the present application, the vehicle frame includes two longitudinal beams, the recess structure includes a first recess and a second recess, the first recess and the second recess are respectively used for accommodating the two longitudinal beams, the first recess and the second recess divide the upper portion of the battery pack into a first battery portion and two second battery portions, the first battery portion is located between the two longitudinal beams, the two second battery portions are located on both sides of the two longitudinal beams.

According to some embodiments of the present application, the battery pack further includes a third battery portion, the third battery portion is located below the first battery portion and the second battery portion, and the third battery portion being both connected to the internal space of the first battery portion and the internal space of the second battery portion.

According to some embodiments of the present application, the outer peripheral wall of the third battery portion is formed with a fixed structure adapted to be connected to the vehicle frame, and the fixed structure is formed as a fixed rib plate extending along the circumferential direction of the battery pack.

According to some optional embodiments of the present application, the battery pack further includes a power distribution module, the wire harness includes an electrical connection wire harness, the electrical connection wire harness is electrically connected to the power distribution module, and the power distribution module is arranged in the first battery portion.

According to the second aspect embodiment of the present application, the chassis assembly includes a vehicle frame; and a battery pack, wherein the battery pack is installed on the vehicle frame, and the battery pack is a battery pack according to the first aspect embodiment of the present application.

According to the chassis assembly of the present embodiment, by setting up the above-mentioned battery pack and forming an wire outlet on the top of the battery pack for leading out a wire harness of the battery pack, it is conducive to the layout of the battery pack outlet harness and the connection of the outlet harness with other components, and at the same time, it can fully utilize the upper space of the battery pack and improve the overall space utilization.

According to some embodiments of the present application, the vehicle frame further includes a plurality of crossbeams, the plurality of crossbeams are spaced apart in the front to rear direction and located between the two longitudinal beams; wherein, a wire hole is formed on the crossbeam, and/or a wire groove is defined between the upper surface of the crossbeam and the two longitudinal beams.

According to some embodiments of the present application, the vehicle frame further includes an installation bracket, the installation bracket is provided on the left and right sides of the frame, and the installation bracket is connected to the fixed structure of the battery pack.

According to the third aspect embodiment of the present application, the vehicle includes: the chassis assembly according to the second embodiment of the present application.

According to the embodiment of the present application, by setting up the above-mentioned chassis assembly and forming an wire outlet on the top of the battery pack for leading out a wire harness of the battery pack, it is conducive to the layout of the battery pack outlet harness and the connection of the outlet harness with other components, and at the same time, it can fully utilize the upper space of the battery pack and improve the overall space utilization.

According to some embodiments of the present application, the left-right width of the battery pack does not exceed the width of the vehicle body_{∘}

The additional aspects and advantages of this application will be partially presented in the following description, some of which will become apparent from the following description, or learned through practice of this application.

### BRIEF DESCRIPTION OF THE DRAWINGS

The above and/or additional aspects and advantages of the present application will become apparent and easily understood from the description of the embodiments in conjunction with the following figures, wherein:
FIG. 1 is a partial schematic diagram of a chassis assembly according to some embodiments of the present application;
FIG. 2 is a perspective view of the battery pack in FIG. 1;
FIG. 3 is a schematic diagram of the vehicle frame in FIG. 1.

### Reference numerals:

10. vehicle frame; 11. longitudinal beam; 12. crossbeam; 121. wire hole; 13. accommodation space;
20. battery pack; 2. recess structure; 21. first recess; 22. second recess; 31. first battery portion; 32. second battery portion; 33. third battery portion; 34. wire outlet; 35. routing space; 36. fixed rib plate; 37. strengthen rib plate; 4. fixed structure;
30. installation bracket.

### DETAILED DESCRIPTION

The embodiments of the present application are described in detail below, and examples of the embodiments are shown in the accompanying drawings, where identical or similar reference numerals from beginning to end represent identical or similar elements or elements with identical or similar functions. The embodiments described below with reference to the accompanying drawings are exemplary and are only used to explain the present application, and should not be construed as a limitation on the present application.

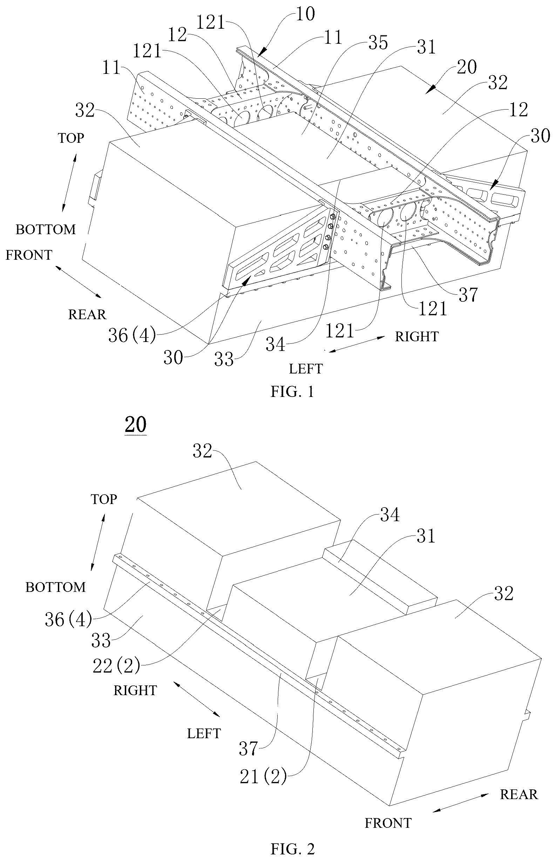

The battery pack 20 according to the embodiments of the present application is described below with reference to FIG.1 to 3.

As shown in FIGS.1 to 3, according to the first aspect embodiment of the present application, the battery pack 20 has a recess structure 2 for accommodating the longitudinal beam 11 of the chassis 10. The longitudinal beam 11 of the frame 10 is accommodated in the recess structure 2, which can make the overall structure more compact, increase the space utilization of the frame 10, and at the same time, make the battery pack 20 fit more tightly with the frame 10, which is conducive to increasing the overall structural strength of the frame 10. When it is necessary to install the battery pack 20 on the frame 10, the recess structure 2 can be used to achieve quick positioning of the battery pack 20, which facilitates the installation of the battery pack 20 and improves the overall installation efficiency.

During the driving process of the vehicle, the battery pack 20 is connected to the longitudinal beam 11 of the frame 10, so that the battery pack 20 plays the same role as the transverse beam 12 of the frame 10, which can share some of the forces acting on the frame 10, thereby improving the overall torsional performance of the frame 10.

The top of battery pack 20 is formed with a wire outlet 34, the wire outlet 34 is adapted for leading out a wire harness of the battery pack 20. The wire harness inside battery pack 20 can be led out through the wire outlet 34, allowing battery pack 20 to provide electrical energy to other components of the vehicle and facilitate control of battery pack 20 by other components. The wire outlet 34 of the battery pack 20 is formed at the top of the first battery portion 31, which can facilitate the arrangement of the wiring harness of the battery pack 20 and the connection of the wiring harness with other components, and at the same time, it can fully utilize the upper space of the battery pack 20 and improve the overall space utilization.

According to the embodiment of the present application, the battery pack 20 has a wire outlet 34 formed at the top of the battery pack 20, and the wire outlet 34 is adapted for leading out a wire harness of the battery pack 20. This facilitates the layout of the wire harness of the battery pack 20 and the connection between the wire harness and other components. At the same time, it can fully utilize the upper space of the battery pack 20 and improve the overall space utilization.

According to some embodiments of the present application, referring to FIGS.1 to 2, the wire harness includes a thermal management tube wire harness and an electrical connection wire harness. The thermal management tube wire harness can facilitate the temperature regulation inside the battery pack 20 by the vehicle, thereby ensuring the charging and discharging performance of the battery pack 20. The electrical connection wire harness can transmit the electrical energy inside the battery pack 20 to other components of the vehicle, thereby ensuring the overall normal working condition of the vehicle. When the battery pack 20 needs to be charged, the electrical connection wire harness can also be electrically connected to an external power source to achieve charging of the battery pack 20.

A routing space 35 is defined between the upper surface of the battery pack 20 and the vehicle frame 10, and the routing space 35 is used for routing the wire harness. The routing space 35 can provide a lead out space for the wire harness of the battery pack 20, facilitating the layout of the outlet harness of the battery pack 20 and the connection between the outlet harness and other components.

The thermal management pipe wire harness and electrical connection wire harness inside the battery pack 20 can be led out from the wire outlet 34 and connected to external components after passing through the routing space 35, thereby achieving vehicle control of the internal temperature of the battery pack 20 and ensuring the normal charging and discharging process of the battery pack 20.

According to some embodiments of the present application, referring to FIGS.1 to 2, the recess structure 2 divides the upper part of the battery pack 20 into a first battery portion 31 and a second battery portion 32. The first battery portion 31 is suitable for being located inside the vehicle frame 10, which can fully utilize the space inside the vehicle frame 10, make the structure more compact, and improve the overall space utilization.

The wire outlet 34 is located at the top of the first battery portion 31, and the wire outlet 34 of the battery pack 20 is located at the top of the first battery portion 31, which can fully utilize the upper space of the battery pack 20 and facilitate the connection between the battery pack 20 and external components. The routing space 35 is located above the first battery portion 31. The routing space 35 can provide a lead out space for the wire harness of the battery pack 20, facilitating the layout of the outlet harness of the battery pack 20 and the connection between the outlet harness and other components.

According to some embodiments of the present application, referring to FIG.2, the vehicle frame 10 includes two longitudinal beams 11, the two longitudinal beams 11 can be left and right facing each other and spaced apart. The recess structure 2 includes a first recess 21 and a second recess 22, the first recess 21 and the second recess 22 are respectively used to accommodate two longitudinal beams 11. The first recess 21 and the second recess 22 can also be left and right facing each other and spaced apart, so that the first recess 21 and the second recess 22 can better fit with the two longitudinal beams 11 respectively. The two longitudinal beams 11 are respectively accommodated in the first recess 21 and the second recess 22, which can make the fit between the vehicle frame 10 and the battery pack 20 tighter, and is conducive to increasing the overall structural strength of the vehicle frame 10. Moreover, it can achieve rapid positioning of battery pack 20, making it easier to install and improving overall installation efficiency.

The first recess 21 and the second recess 22 divide the upper portion of the battery pack 20 into a first battery portion 31 and two second battery portions 32. The first battery portion 31 is located between the two longitudinal beams 11, which can fully utilize the space between the two longitudinal beams 11, make the structure more compact, and improve the overall space utilization. Two second battery portions 32 are located on both sides of the two longitudinal beams 11. The second battery portions 32 can be located on the left and right sides of the two longitudinal beams 11, which can make the overall mass distribution more uniform, balance the force on the vehicle frame 10, and thus improve the stability of the vehicle during driving.

According to some embodiments of the present application, referring to FIGS.1 to 2, the battery pack 20 further includes a third battery portion 33 located below the first battery portion 31 and the second battery portion 32. When the battery pack 20 is installed on the vehicle frame 10, the third battery portion 33 can be arranged below the vehicle frame 10, thereby fully utilizing the space below the vehicle frame 10 and improving the overall space utilization efficiency. Meanwhile, the third battery portion 33 is located below the first battery portion 31 and the second battery portion 32. During vehicle operation, it can lower the overall center of gravity, improve vehicle stability, and increase the safety of high-speed driving.

The internal space of the third battery portion 33 is connected to the internal space of the first battery portion 31 and the internal space of the second battery portion 32, which facilitates the connection of wire harnesses between various portions inside the battery pack 20, and enables the wire harnesses of various portions inside the battery pack 20 to be led out from the wire outlet 34. At the same time, it can ensure that the battery pack 20 has a large capacity inside.

According to some embodiments of the present application, referring to FIG.1, the outer peripheral wall of the third battery portion 33 is formed with a fixed structure 4, the fixed structure 4 is suitable for connecting to the vehicle frame 10. The fixed structure 4 is formed as a fixed rib plate 36 extending along the circumferential direction of the battery pack 20. The battery pack 20 can be connected to the vehicle frame 10 through the fixed structure 4, thereby fixing the battery pack 20 relative to the frame 10. For example, the fixed rib plate 36 can be arranged on the front and rear side walls of the third battery portion 33, and the fixed rib plate 36 can extend in the left-right direction. The front and rear side walls of the third battery portion 33 can both be arranged with two fixed rib plates 36.

According to some embodiments of the present application, referring to FIGS.1 to 2, the front and rear side walls of the third battery portion 33 of the battery pack 20 are also arranged with strengthen rib plate 37, the strengthen rib plate 37 extend in the left-right direction and are connected between two fixed rib plates 36. The strengthen rib plate 37 is connected between the two fixed rib plates 36, which can improve the structural strength of the two fixed rib plates 36, make the connection between the fixed rib plate 36 and the vehicle frame 10 more reliable, and thus make the connection between the battery pack 20 and the vehicle frame 10 more reliable.

For example, the strengthen rib plate 37, the fixed rib plate 36, and the shell of the battery pack 20 can be integrally formed, which can increase the structural strength between the strengthen rib plate 37, the fixed rib plate 36, and the battery pack 20, prevent fractures between the strengthen rib plate 37, the fixed rib plate 36, and the battery pack 20, while also facilitate the assembly of the battery pack 20 and the vehicle frame 10, reduce assembly costs. The shell of battery pack 20 can be made of castings or stamped parts, which can reduce the production cost of battery pack 20 and improve its structural strength.

According to some embodiments of the present application, referring to FIG. 1, the battery pack 20 further includes a power distribution module, and the wire harness includes an electrical connection wire harness, which is electrically connected to the power distribution module. The power distribution module is arranged in the first battery portion 31. Due to the fact that the wire outlet 34 of the battery pack 20 is located at the top of the first battery portion 31, and the power distribution module is arranged in the first battery portion 31, the distance between the power distribution module and the wire outlet 34 can be shortened, thereby facilitating the connection between other components of the vehicle and the power distribution module of the battery pack 20.

According to the chassis assembly of the second aspect of the present application, includes: a vehicle frame 10 and a battery pack 20 according to the first aspect embodiment of the present application.

The battery pack 20 is installed on the vehicle frame 10, which can provide support for the battery pack 20. When it is necessary to install the battery pack 20 on the vehicle frame 10, the recess structure 2 can be used to achieve quick positioning of the battery pack 20, which facilitates the installation of the battery pack 20 and improves the overall installation efficiency.

When the battery pack 20 is installed on the vehicle frame 10, the two longitudinal beams 11 of the vehicle frame 10 are respectively accommodated in the first recess 21 and the second recess 22, which can make the overall structure more compact, increase the space utilization of the vehicle frame 10, and make the battery pack 20 fit more tightly with the vehicle frame 10, which is conducive to increase the overall structural strength of the vehicle frame 10.

According to the chassis assembly of the present embodiment, by setting up the above-mentioned battery pack 20 and forming an wire outlet 34 on the top of the battery pack 20 for leading out a wire harness of the battery pack 20, it is conducive to the layout of the battery pack 20 outlet harness and the connection of the outlet harness with other components, and at the same time, it can fully utilize the upper space of the battery pack 20 and improve the overall space utilization.

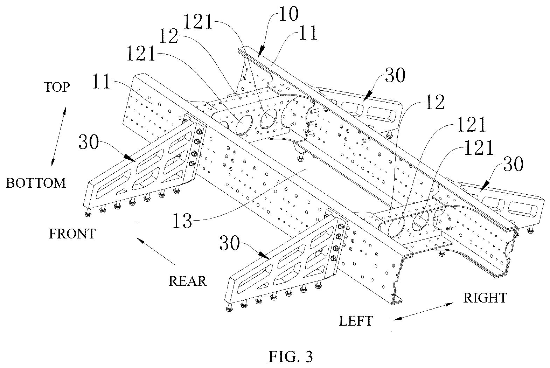

According to some embodiments of the present application, referring to FIGS. 1 and 3, the vehicle frame 10 further includes a plurality of crossbeams 12, a plurality of crossbeams 12are spaced apart in the front to rear direction and located between two longitudinal beams 11. Two crossbeams 12 and two longitudinal beams 11 enclose an accommodation space 13 for accommodating the first battery portion 31. The crossbeam 12 is connected to the two longitudinal beams 11, which can share the force on the vehicle frame 10 and enhance the torsional strength of the vehicle frame 10. Two crossbeams 12 and two longitudinal beams 11 enclose an accommodation space 13 for accommodating the first battery portion 31, which can fully utilize the space of the vehicle frame 10, make the overall structure more compact and improve space utilization.

Wherein, a wire hole 121 is formed on the crossbeam 12, and the wire hole 121 can provide space for the wire harness to pass through, facilitating the connection between the battery pack 20 and other components, while also improving overall space utilization.

According to some embodiments of the present application, referring to FIGS 1 and 3, the vehicle frame further includes a plurality of crossbeams, the plurality of crossbeams are spaced apart in the front to rear direction and located between two longitudinal beams. Two crossbeams 12 and two longitudinal beams 11 enclose an accommodation space 13 for accommodating the first battery portion 31. The crossbeam 12 is connected to two longitudinal beams 11, which can share the force on the vehicle frame 10 and enhance the torsional strength of the vehicle frame 10. Two crossbeams 12 and two longitudinal beams 11 enclose an accommodation space 13 for accommodating the first battery portion 31, which can fully utilize the space of the vehicle frame 10, make the overall structure more compact and improve space utilization.

Wherein, a wire groove is defined between the upper surface of the crossbeam 12 and the two longitudinal beams 11. The wire groove can provide space for the wire harness to pass through, thereby making it easier to connect the battery pack 20 to other components and improving overall space utilization.

According to some embodiments of the present application, referring to FIGS 1 and 3, the vehicle frame 10 further includes installation brackets 30, the installation brackets 30, are provided on the left and right sides of the vehicle frame 10 and connected to the fixed structure 4 of the battery pack 20. The fixed structure 4 of the battery pack 20 is connected to the installation bracket 30, allowing the battery pack 20 to be connected to the vehicle frame 10 through the installation bracket 30, thereby making the connection between the battery pack 20 and the vehicle frame 10 more reliable and improving the overall structural strength.

For example, the installation bracket 30 can be in the shape of a rib plate, which can increase the structural strength of the installation bracket, thereby ensuring the overall structural strength, and also facilitate the connection between the battery pack 20 and the vehicle frame 10. The installation bracket 30 can be made of castings or sheet metal parts, which can give the installation bracket 30 the advantages of low production cost and high strength. The installation bracket 30 can be independently formed from the vehicle frame 10, when the installation bracket 30 is damaged, only the installation bracket 30 can be replaced, thereby reducing the overall maintenance cost. The installation bracket 30 can be connected to the fixed rib plate 36 through fasteners, with a simple structure, reliable connection, and easy disassembly and assembly.

According to some embodiments of the present application, referring to FIGS. 1 and 3, the installation bracket 30 is detachably connected to the vehicle frame 10, which can facilitate the installation and disassembly of the installation bracket 30 and facilitate the maintenance and replacement of the installation bracket 30 in the later stage. The installation bracket 30 can be connected to the vehicle frame 10 through fasteners, with a simple structure, reliable connection, and easy disassembly and installation.

According to some embodiments of the present application, referring to FIG. 1, the battery pack 20 is detachably connected to the installation bracket 30, which can facilitate the installation and removal of the battery pack 20 and facilitate its maintenance and replacement. The battery pack 20 and the installation bracket 30 can be connected by fasteners, with a simple structure, reliable connection, and easy disassembly and installation.

According to the vehicle of the third aspect embodiment of the present application, includes: a chassis assembly according to the second embodiment of the present application, wherein, the vehicle can be a heavy-duty truck.

According to the vehicle of the present application, by setting up the chassis assembly as described above, by forming an wire outlet 34 on the top of the battery pack 20 and using the wire outlet 34 for leading out the wire harness of the battery pack 20, it can be conducive to the layout of the wire harness of the battery pack 20 and the connection between the wiring harness and other components, and at the same time, it can fully utilize the upper space of the battery pack 20 and improve the overall space utilization.

According to some embodiments of the present application, referring to FIG.1, the left-right width of the battery pack 20 does not exceed the width of the vehicle body, for example, the width of the battery pack 20 in the left-right direction is smaller than the width of the vehicle body, or the width of the battery pack 20 in the left-right direction is equal to the width of the vehicle body. The left-right width of battery pack 20 should not exceed the width of the vehicle body, which can prevent collisions between the left and right sides of battery pack 20 during vehicle operation, thereby improving the safety of battery pack 20 during vehicle operation. In addition, when the battery pack 20 is installed on the vehicle, it can improve the vehicle's passability without increasing the overall width of the vehicle.

In the description of specification, the reference terms "one embodiment", "some embodiments", "illustrative embodiments", "example", "specific example", or "some examples" refer to the specific features, structures, materials, or characteristics described in conjunction with the embodiments or examples included in at least one embodiment or example of this application. In this specification, the illustrative expressions of the above terms may not necessarily refer to the same embodiment or example. Moreover, the specific features, structures, materials, or characteristics described can be combined in any one or more embodiments or examples in a suitable manner.

Although the embodiments of the present application have been shown and described, those of ordinary skilled person in the art can understand that various changes, modifications, substitutions, and variations can be made to these embodiments without departing from the principles and purposes of the present application, and the scope of the present application is limited by the claims and their equivalents.

## Claims

1. A battery pack (20), wherein the battery pack being provided with a recess structure (2), and the recess structure (2) being used for accommodating a longitudinal beam (11) of a vehicle frame (10); and a wire outlet (34) being formed at a top of the battery pack (20), and the wire outlet (34) being adapted for leading out a wire harness of the battery pack (20).

2. The battery pack (20) according to claim 1, wherein the wire harness comprises a thermal management tube wire harness and an electrical connection wire harness, and a routing space being defined between an upper surface of the battery pack (20) and the vehicle frame (10), and the routing space being used for routing the wire harness.

3. The battery pack (20) according to claim 2, wherein the recess structure (2) divides an upper portion of the battery pack (20) into a first battery portion (31) and a second battery portion (32), the first battery portion (31) being adapted to be located inside the vehicle frame (10), the wire outlet (34) being disposed at a top of the first battery portion (31), and the routing space being located above the first battery portion (31).

4. The battery pack (20) according to any one of claims 1 to 3,wherein the vehicle frame (10) comprises two longitudinal beams (11), the recess structure (2) comprises a first recess (21) and a second recess (22), the first recess (21) and the second recess (22) being respectively used for accommodating the two longitudinal beams(11), the first recess (21) and the second recess (22) divide the upper portion of the battery pack (20) into a first battery portion (31) and two second battery portions (32), the first battery portion (31) being located between the two longitudinal beams (11), the two second battery portions (32) being located on both sides of the two longitudinal beams(11).

5. The battery pack (20) according to claim 3 or 4, wherein the battery pack (20) further comprises a third battery portion (33), the third battery portion (33) being located below the first battery portion (31) and the second battery portion (32), and the third battery portion (33) being both connected to an internal space of the first battery portion (31) and an internal space of the second battery portion (32).

6. The battery pack (20) according to claim 5, wherein an outer peripheral wall of the third battery portion (33) being formed with a fixed structure (4), the fixed structure (4) is suitable for connecting to the vehicle frame (10), and the fixed structure (4) being formed as a fixed rib plate (36) extending along a circumferential direction of the battery pack (20).

7. The battery pack (20) according to claim 4, wherein the battery pack (20) further comprises a power distribution module, the wire harness comprises an electrical connection wire harness, the electrical connection wire harness being electrically connected to the power distribution module, and the power distribution module being arranged in the first battery portion (31).

8. A chassis assembly, comprising:
a vehicle frame (10); and
a battery pack (20), the battery pack (20) being installed on the vehicle frame (10), and the battery pack (20) being a battery pack (20) according to any one of claims 1 to 7.

9. The chassis assembly according to claim 8, wherein the vehicle frame (10) further comprises a plurality of crossbeams (12), the plurality of crossbeams (12) being spaced apart in the front to rear direction and located between the two longitudinal beams (11); wherein, a wire hole (121) is formed on the crossbeam (12), and/or a wire groove is defined between the upper surface of the crossbeam (12) and the two longitudinal beams (11).

10. The chassis assembly according to claim 8 or 9, wherein the vehicle frame (10) further comprises an installation bracket (30), the installation bracket (30) being provided on left and right sides of the frame (10), and the installation bracket (30) being connected to a fixed structure (4) of the battery pack (20).

11. A vehicle, comprising a chassis assembly according to any one of claims 8 to 10.

12. The vehicle according to claim 11, wherein a left-right width of the battery pack (20) does not exceed a width of the vehicle body.
